# EUROPEAN PATENT APPLICATION

(11) **EP 4 601 355 A1**
(43) Date of publication of application: **13.08.2025**
(21) Application number: 23884779.2
(22) Date of filing: 27.10.2023
(51) Int. Cl.: H04W 28/02

(54) **FORMAT DETERMINATION METHOD, USER EQUIPMENTS (UES) AND READABLE STORAGE MEDIUM**

(30) Priority: 03.11.2022 CN 202211371048
(71) Applicant: Vivo Mobile Communication Co., Ltd., Dongguan, Guangdong 523863 (CN)
(72) Inventor: LIU, Jinhua, Dongguan, Guangdong 523863 (CN)
(74) Representative: Murgitroyd & Company
(86) International application number: PCT/CN2023/127309
(87) International publication number: WO 2024/093847

(57) **Abstract**

This application pertains to the field of communication technologies, and discloses a format determining method, user equipment UE, and a readable storage medium. The format determining method in embodiments of this application includes: determining, by a user equipment UE, a target buffer status report BSR format from a first BSR format and a second BSR format based on first information, where the target BSR format is used for BSR reporting; a BSR in the first BSR format includes first buffer data volume information; and a BSR in the second BSR format includes delay information and/or second buffer data volume information about a time for reporting uplink data of the UE, where quantization accuracy of the second buffer data volume information is higher than quantization accuracy of the first buffer data volume information.

## Description

### CROSS-REFERENCE TO RELATED APPLICATIONS

This application claims priority to Chinese Patent Application No. 202211371048.4, filed in China on November 3, 2022, which is incorporated herein by reference in its entirety.

### TECHNICAL FIELD

This application pertains to the field of communication technologies, and specifically relates to a format determining method, user equipment UE, and a readable storage medium.

### BACKGROUND

Currently, user equipment (User Equipment, UE) can report delay information of uplink data by using a new buffer status report (Buffer Status Report, BSR) format, and reduce a quantization error of an uplink data volume.

However, because the new BSR format includes the foregoing information, a size of the new BSR format is greater than that of an existing BSR format. Therefore, how to select an appropriate BSR format is an urgent problem to be resolved.

### SUMMARY

Embodiments of this application provide a format determining method, UE, and a readable storage medium, so that the UE can select an appropriate BSR format.

According to a first aspect, a format determining method is provided and applied to UE. The method includes: determining, by the UE, a target buffer status report BSR format from a first BSR format and a second BSR format based on first information, where the target BSR format is used for BSR reporting; a BSR in the first BSR format includes first buffer data volume information; and a BSR in the second BSR format includes delay information and/or second buffer data volume information about a time for reporting uplink data of the UE, where quantization accuracy of the second buffer data volume information is higher than quantization accuracy of the first buffer data volume information.

According to a second aspect, a format determining apparatus is provided. The apparatus includes a determining module, where the determining module is configured to determine a target buffer status report BSR format from a first BSR format and a second BSR format based on first information, where the target BSR format is used for BSR reporting; a BSR in the first BSR format includes first buffer data volume information; and a BSR in the second BSR format includes delay information and/or second buffer data volume information about a time for reporting uplink data of UE, where quantization accuracy of the second buffer data volume information is higher than quantization accuracy of the first buffer data volume information.

According to a third aspect, UE is provided. The UE includes a processor and a memory. The memory stores a program or instructions capable of running on the processor. When the program or instructions are executed by the processor, the steps of the method according to the first aspect are implemented.

According to a fourth aspect, UE is provided and includes a processor and a communication interface. The processor is configured to determine a target buffer status report BSR format from a first BSR format and a second BSR format based on first information.

According to a fifth aspect, a format determining system is provided and includes a terminal and a network-side device. The terminal may be configured to perform the steps of the format determining method according to the first aspect. The network-side device may be configured to perform the steps of the format determining method according to the first aspect.

According to a sixth aspect, a readable storage medium is provided. The readable storage medium stores a program or instructions. When the program or instructions are executed by a processor, the steps of the method according to the first aspect are implemented.

According to a seventh aspect, a chip is provided. The chip includes a processor and a communication interface. The communication interface is coupled to the processor. The processor is configured to run a program or instructions to implement the steps of the method according to the first aspect.

According to an eighth aspect, a computer program or program product is provided. The computer program or program product is stored in a storage medium. The computer program or program product is executed by at least one processor to implement the steps of the method according to the first aspect.

In the embodiments of this application, the UE determines the target buffer status report BSR format from the first BSR format and the second BSR format based on the first information, where the target BSR format is used for BSR reporting; the BSR in the first BSR format includes the first buffer data volume information; and the BSR in the second BSR format includes the delay information and/or the second buffer data volume information about a time for reporting uplink data of the UE, where quantization accuracy of the second buffer data volume information is higher than quantization accuracy of the first buffer data volume information. A plurality of BSR formats exist. In a case that the BSR in the first BSR format including only the first buffer data volume information and the BSR in the second BSR format including the delay information and/or the second buffer data volume information about a time for reporting uplink data of the UE exist, the UE can make a selection between the first BSR format and the second BSR format based on the first information. Therefore, the UE can select a BSR corresponding to an appropriate BSR format based on a requirement.

### BRIEF DESCRIPTION OF DRAWINGS

FIG. 1 is a schematic diagram of an architecture of a communication system according to an embodiment of this application;
FIG. 2 is a schematic diagram of a BSR format according to an embodiment of this application;
FIG. 3 is a schematic diagram of a format determining method according to an embodiment of this application;
FIG. 4 is a schematic diagram of a structure of a format determining apparatus according to an embodiment of this application;
FIG. 5 is a schematic diagram of a hardware structure of a communication device according to an embodiment of this application; and
FIG. 6 is a schematic diagram of a hardware structure of UE according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

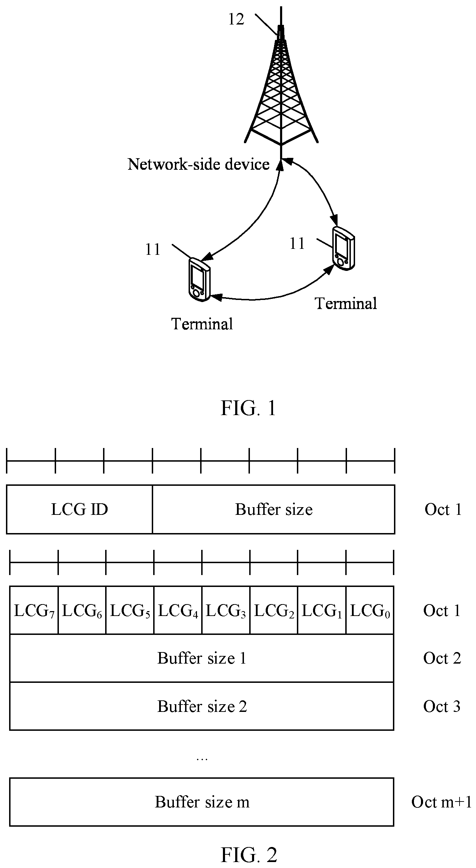

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

Currently, the 3GPP (3rd Generation Partnership Project, 3rd Generation Partnership Project) has agreed to introduce a new BSR report, so that UE can report delay information of uplink data and reduce a quantization error of an uplink data volume. A size of a new BSR format is greater than a size of an existing BSR format. How to design a BSR format and select an appropriate BSR format according to a situation is a new problem to be resolved.

### Brief description of Rel-15/16 BSR:

A Rel-15 BSR is currently supported by default. The Rel-15 BSR includes the following types of BSRs:
1. Regular BSR (Regular BSR), which can be triggered in any one of the following cases:
   a logical channel (Logical Channel, LCH) with a higher priority than all current LCHs that have data to send transitions from having no data to send to having data to send;
   when all LCHs have no data to send, one of the LCHs transitions to having data to send; and
   when a BSR retransmission timer (retxBSR-Timer) expires, at least one LCH still has data to send.
2. Periodic BSR (Periodic BSR), which can be triggered when a sending timer (periodicBSR-Timer) expires.
3. Padding BSR (Padding BSR), which can be triggered when a MAC PDU has a remaining capacity to accommodate a BSR MAC CE after accommodating all data.

An LCH belongs to a logical channel group (LCH group), and a buffer size level (Buffer Size Level, BSL) of a BSR is reported in units of LCGs. A maximum of eight LCGs can be configured for UE. A regular BSR can trigger sending of an uplink scheduling request (Scheduling Request, SR). If a grant (grant) is not obtained after an SR is sent last time, SR retransmission can be triggered. A schematic diagram of a BSR format is provided, and the schematic diagram of the format is a schematic diagram of a BSR MAC CE format in NR Rel-15. As shown in FIG. 2, for the regular/periodic BSR, if the UE has more than one LCG with data, a long BSR is used; otherwise, a short BSR is used.

### Concept of a PDU set in extended reality (Extended Reality, XR):

XR is a video service provided based on low latency and high definition. Currently, media data units of the video service being discussed by the 3GPP are in units of PDU sets. One PDU set includes at least one PDU, which is a PDU generated after a video source end encodes an image region of an image. After receiving a PDU belonging to a PDU set, the video source end can perform video decoding to restore a corresponding image or image region.

Usually, a new BSR format needs to be used to introduce delay information of uplink data into a BSR and reduce a quantization error, so that a network-side device (such as a base station) can obtain more detailed uplink data information. How the UE determines whether to use the new BSR format or the existing BSR format is a problem that needs to be resolved. In addition, the base station does not require detailed information in all cases, that is, sometimes reporting the detailed information by the UE does not assist the base station in scheduling, but increases BSR overheads.

An embodiment of this application provides a format determining method. After a new BSR format is introduced, BSR formats available to the UE include a first BSR format and a second BSR format. The first BSR format is an existing BSR format, that is, a quantized table of a buffer data volume in R15 is used and the BSR does not include data delay information. The second BSR format can use a quantized table of a new buffer data volume and/or include data delay information. In other words, a method for selecting a BSR format from the first BSR format and the second BSR format is provided.

A format determining method provided in embodiments of this application is hereinafter described in detail by using some embodiments and application scenarios thereof with reference to the accompanying drawings.

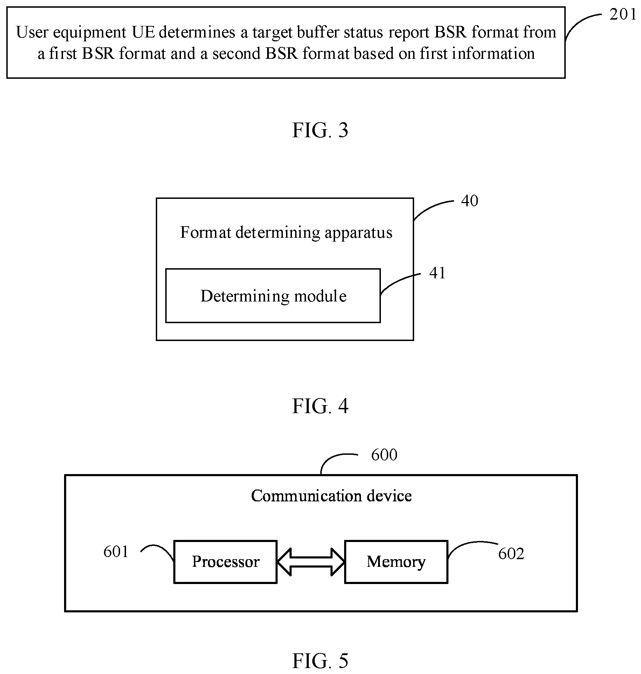

An embodiment of this application provides a format determining method. FIG. 3 is a flowchart of a format determining method according to an embodiment of this application. As shown in FIG. 3, the format determining method provided in this embodiment of this application may include the following step 201.

Step 201: UE determines a target buffer status report BSR format from a first BSR format and a second BSR format based on first information.

The target BSR format is used for BSR reporting;
the target BSR format includes the first BSR format and the second BSR format;
a BSR in the first BSR format includes first buffer data volume information; and
a BSR in the second BSR format may include delay information and/or second buffer data volume information about a time for reporting uplink data of the UE, where
quantization accuracy of the second buffer data volume information is higher than quantization accuracy of the first buffer data volume information.

It should be noted that after sampled values are obtained in an analog electronics technology, data needs to be quantized. Quantization refers to a process of representing sampled values at various moments in binary notation that can be recognized by a computer. Because there is an error between a quantized value and an original sampled value, a value corresponding to the quantization error is quantization accuracy.

It may be understood that, that quantization accuracy of the second buffer data volume information is higher than quantization accuracy of the first buffer data volume information means that a quantization error of a second buffer volume is smaller than a quantization error of a first buffer data volume.

Optionally, in this embodiment of this application, the first information includes at least one of the following:
first indication information received from a network-side device,
first configuration information received from the network-side device, and
report content information that the UE needs to report, where
the first indication information indicates that the UE is to use the target BSR format.

Optionally, in this embodiment of this application, the first BSR format includes at least one of the following: a first long BSR format, a first short BSR format, a first long truncated BSR format, and a first short truncated BSR format; or the second BSR format includes at least one of the following: a second long BSR format, a second short BSR format, a second long truncated BSR format, and a second short truncated BSR format.

Optionally, in this embodiment of this application, the network-side device can explicitly configure whether the UE uses the first BSR format or the second BSR format.

For example, in a case that a network-side device (such as a base station) preconfigures, by using radio resource control (Radio Resource Control, RRC) signaling, the UE to use the first BSR format, the UE selects the first BSR format; or in a case that a base station preconfigures, by using RRC signaling, the UE to use the second BSR format, the UE selects the second BSR format.

Optionally, in this embodiment of this application, the UE may receive the first indication information from the network-side device, and select the target BSR format based on the first indication information.

For example, in a case that the first indication information indicates that the UE is to use the first BSR format, the UE selects the first BSR format, or in a case that the first indication information indicates that the UE is to use the second BSR format, the UE selects the second BSR format.

According to the format determining method provided in this embodiment of this application, the UE determines the target buffer status report BSR format from the first BSR format and the second BSR format based on the first information, where the target BSR format is used for BSR reporting; the BSR in the first BSR format includes the first buffer data volume information; and the BSR in the second BSR format includes the delay information and/or the second buffer data volume information about a time for reporting uplink data of the UE, where quantization accuracy of the second buffer data volume information is higher than quantization accuracy of the first buffer data volume information. A plurality of BSR formats exist. In a case that the BSR in the first BSR format including only the first buffer data volume information and the BSR in the second BSR format including the delay information and/or the second buffer data volume information about a time for reporting uplink data of the UE exist, the UE can make a selection between the first BSR format and the second BSR format based on the first information. Therefore, the UE can select a BSR corresponding to an appropriate BSR format based on a requirement.

Optionally, in this embodiment of this application, the first information includes the first configuration information; and the foregoing step 201 may be specifically implemented by the following step 201a.

Step 201a: The UE determines the target BSR format from the first BSR format and the second BSR format based on a first preset condition and the first configuration information.

Optionally, in this embodiment of this application, the first preset condition includes at least one of the following:
in a case that the first configuration information configures the UE to report delay information of at least one logical channel group LCG, the UE determines that the target BSR format is the second BSR format;
in a case that the first configuration information configures the UE to report the delay information of the at least one logical channel group LCG and that the UE determines that the delay information of the at least one LCG needs to be reported, the UE determines that the target BSR format is the second BSR format;
in a case that the first configuration information configures the UE to report buffer data volume information of the at least one LCG based on a first table, the UE determines that the target BSR format is the second BSR format; and
in a case that the first configuration information configures the UE to report the buffer data volume information of the at least one LCG based on the first table and that the UE determines that the buffer data volume information of the at least one LCG needs to be reported based on the first table, the UE determines that the target BSR format is the second BSR format, where
the first table includes the second buffer data volume information, the second buffer data volume information includes a correspondence between a sequence number of a second buffer data volume and a second buffer data volume range, and the second buffer data volume is a buffer data volume corresponding to the second buffer data volume information.

Optionally, in this embodiment of this application, the first preset condition includes at least one of the following:
in a case that the first configuration information configures the UE to report delay information of at least one LCG and that a data volume of to-be-transmitted data of the at least one LCG is less than or equal to a preset threshold, the UE determines that the target BSR format is the first BSR format; and
in a case that the first configuration information configures the UE to report the delay information of the at least one LCG and that the data volume of the to-be-transmitted data of the at least one LCG is greater than the preset threshold, the UE determines that the target BSR format is the second BSR format.

Optionally, in this embodiment of this application, the report content information that the UE needs to report includes delay information and/or buffer data volume information.

Optionally, in this embodiment of this application, in a case that the network-side device implicitly configures the UE to select the first BSR format, the UE may determine that the target BSR format is a first target BSR format; or in a case that the network-side device implicitly configures the UE to select the second BSR format, the UE may determine that the target BSR format is a second BSR format.

Optionally, in this embodiment of this application, the UE determines the target BSR format from the first BSR format and the second BSR format based on the first preset condition and the first configuration information.

Optionally, in this embodiment of this application, the foregoing step 201a may be specifically implemented by the following step 201a1, 201a2, 201a3, 201a4, 201a5, or 201a6.

Step 201a1: In a case that the first configuration information configures the UE to report delay information of at least one logical channel group LCG, the UE determines that the target BSR format is the second BSR format.

Optionally, in this embodiment of this application, in a case that the base station configures the UE to report delay information of at least one LCG, the UE determines a BSR format from the second BSR format to perform BSR reporting.

Step 201a2: In a case that the first configuration information configures the UE to report delay information of at least one logical channel group LCG and that the UE determines that the delay information of the at least one LCG needs to be reported, the UE determines that the target BSR format is the second BSR format.

Optionally, in this embodiment of this application, when the base station configures the UE to report delay information of at least one LCG, and reporting of delay information is triggered, the UE determines a BSR format from the second BSR format to perform BSR reporting.

Conditions for triggering reporting of delay information include: a delay of at least one data packet of an LCG reaches and/or exceeds a first threshold or a remaining delay budget is lower than a second threshold.

Step 201a3: In a case that the first configuration information configures the UE to report buffer data volume information of at least one LCG based on a first table, the UE determines that the target BSR format is the second BSR format.

Optionally, in this embodiment of this application, in a case that the base station configures a new quantized table of buffer data volumes for at least one LCG/LCH, the UE determines a BSR format from the second BSR format to perform BSR reporting.

Step 201a4: In a case that the first configuration information configures the UE to report buffer data volume information of at least one LCG based on a first table and that the UE determines that the buffer data volume information of the at least one LCG needs to be reported based on the first table, the UE determines that the target BSR format is the second BSR format.

Optionally, in this embodiment of this application, in a case that the base station configures a new quantized table of buffer data volumes for at least one LCG/LCH, and that the UE determines to use the new quantized table of buffer data volumes to quantize the buffer data volumes, the UE determines a BSR format from the second BSR format to perform BSR reporting.

Step 201a5: In a case that the first configuration information configures the UE to report delay information of at least one LCG and that a data volume of to-be-transmitted data of the at least one LCG is less than or equal to a preset threshold, the UE determines that the target BSR format is the first BSR format.

Optionally, in this embodiment of this application, the UE may select a BSR format based on the to-be-transmitted data of the LCG.

Step 201a6: In a case that the first configuration information configures the UE to report delay information of at least one LCG and that a data volume of to-be-transmitted data of the at least one LCG is greater than a preset threshold, the UE determines that the target BSR format is the second BSR format.

Optionally, in this embodiment of this application, the report content information that the UE needs to report includes delay information and/or buffer data volume information.

Optionally, in this embodiment of this application, the first information includes report content information that the UE needs to report; and the foregoing step 201 may be specifically implemented by the following step 201b or step 201c.

Step 201b: In a case that the report content information meets a second preset condition, the UE determines that the target BSR format is a first target BSR format.

Step 201c: In a case that the report content information meets a third preset condition, the UE determines that the target BSR format is a second target BSR format.

The second preset condition includes: the UE triggers filling of the to-be-reported content information into a BSR, the to-be-reported content information only includes to-be-transmitted data information of one LCG, and the one LCG includes delay information or buffer data volume information generated based on a first table.

The first target BSR format includes any one of the following: the second long BSR format, the second short BSR format, the second long truncated BSR format, or the second short truncated BSR format.

The third preset condition includes: the UE triggers filling of the to-be-reported content information into a BSR, the to-be-reported content information only includes the to-be-transmitted data information of the one LCG, and the UE determines that the delay information does not need to be reported and that the buffer data volume does not need to be quantized by using the first table.

The second target BSR format includes either of the following: the first short BSR format or the first short truncated BSR format.

The first table includes the second buffer data volume information, the second buffer data volume information includes a correspondence between a sequence number of a second buffer data volume and a second buffer data volume range, and the second buffer data volume is a buffer data volume corresponding to the second buffer data volume information.

Optionally, in this embodiment of this application, in a case that only one LCG has to-be-transmitted data, the foregoing step 201b may be implemented by the following step 201, and specifically by the following step 11, step 12, step 13, or step 14, and step 201 may correspond to the foregoing steps 201b and 201c.

Step 11: When generating a BSR, if the UE has only one LCG that has to-be-transmitted data, and in a case that this LCG is not configured with delay information reporting and that no new quantized table of buffer data volumes is configured, the UE determines to use the first short BSR format for BSR reporting or the first short truncated BSR format for BSR reporting.

Step 12: When generating a BSR, if the UE has only one LCG that has to-be-transmitted data, the UE is configured to report delay information for the LCG and/or use a new quantized table of buffer data volumes to quantize the buffer data volumes; and in a case that the UE determines, based on a preconfigured condition (for example, delay information of an earliest arrived data packet is lower than a first threshold or a remaining delay budget is higher than a second threshold), that the delay information does not need to be reported, or determines, based on a preconfigured condition (for example, a data volume of the one LCG is lower than a third threshold), that there is no need to use a new quantized table of buffer data volumes to quantize the data volumes, the UE determines to use the first short BSR format for BSR reporting or the first short truncated BSR format for BSR reporting.

Step 13: When the second short BSR format or the second short truncated BSR format is defined in a protocol, when generating a BSR, if the UE has only one LCG that has to-be-transmitted data, and this LCG has delay information to be reported or a new quantized table of buffer data volumes is configured, the UE determines to use the second short BSR format for BSR reporting or the second short truncated BSR format for BSR reporting.

Step 14: When the second short BSR format or the second short truncated BSR format is not defined in a protocol, and the UE generates a BSR, if the UE has only one LCG that has to-be-transmitted data, and this LCG has delay information to be reported or a new quantized table of buffer data volumes is configured, the UE determines to use the second long BSR format for BSR reporting or the second long truncated BSR format for BSR reporting.

Optionally, in this embodiment of this application, the target BSR format includes the second long truncated BSR format; and the format determining method provided in this embodiment of this application further includes the following step 301.

Step 301: The UE determines, based on priority information of at least one LCG and second information, report content information included in a second long truncated BSR, and sends the second long truncated BSR to the network-side device.

In this embodiment of this application, the second information includes at least one of the following: an amount of data allowed to be transmitted on an uplink channel, and to-be-transmitted buffer data volume information and/or delay information of the at least one LCG, and the second long truncated BSR is a BSR corresponding to the second long truncated BSR format.

It should be noted that for the second long truncated BSR, when a capacity of an uplink grant (UL grant) is not enough to carry BSR information of all LCGs with data, content of the BSR can be determined by removing some reporting information of the BSR and reporting remaining information according to a priority principle.

Optionally, in this embodiment of this application, the foregoing step 301 may be specifically implemented by the following step 301a.

Step 301a: The UE fills the buffer data volume information of the at least one LCG into the second long truncated BSR according to a principle that a priority of the buffer data volume information of the at least one LCG is higher than a priority of the delay information of the at least one LCG and a descending priority order of the at least one LCG; and then fills the delay information of the at least one LCG into the second long truncated BSR according to the descending priority order of the at least one LCG.

Optionally, in this embodiment of this application, the UE may include the buffer data volume information into the second long truncated BSR based on a priority of each of the at least one LCG in descending order, and then gradually include the delay information into the second long truncated BSR sequentially based on the priority of each LCG in descending order, until all the report content information is included in the BSR or the capacity provided in the uplink grant is used up.

For example, in a case that there are two LCGs, that is, LCG 1 and LCG 2, if a priority of LCG 1 is higher than that of LCG 2, the priority/order of the report content information included in the BSR is: buffer data volume information of LCG 1, buffer data volume information of LCG 2, delay information of LCG 1, and delay information of LCG 2; if the remaining capacity provided in the uplink grant is not enough to include the delay information of LCG 2 after the delay information of LCG 1 is included, the report content information of the UE for BSR reporting includes: the buffer data volume information of LCG 1, the buffer data volume information of LCG 2, and the delay information of LCG 1.

A priority of an LCG is determined based on a priority of an LCH with a highest priority included in the LCG. If priorities of LCHs with the highest priority in two LCGs are the same, priorities of the two LCGs are determined according to an ascending or descending order of LCG IDs.

Optionally, in this embodiment of this application, the foregoing step 301 may be specifically implemented by the following step 301b.

Step 301b: The UE fills the delay information of the at least one LCG into the second long truncated BSR according to a principle that a priority of the buffer data volume information of the at least one LCG is lower than a priority of the delay information of the at least one LCG and a descending priority order of the at least one LCG; and then fills the buffer data volume information of the at least one LCG into the second long truncated BSR in the descending priority order of the at least one LCG.

Optionally, in this embodiment of this application, the UE may include the delay information into the second long truncated BSR based on a priority of each of the at least one LCG in descending order, and then gradually include the buffer data volume information into the second long truncated BSR sequentially based on the priority of each LCG in descending order, until all the report content information is included in the BSR or the capacity provided in the uplink grant is used up.

Optionally, in this embodiment of this application, the UE may first include report content information of an LCG with a high priority into the BSR based on the priority of each of the at least one LCG, and in a case that a same LCG includes both buffer data volume information and delay information that need to be reported, the UE may perform reporting in one of the following sequential manners:
manner 1: first including the buffer data volume information of the LCG, and then including the delay information of the LCG;
   or
manner 2: first including the delay information of the LCG, and then including the buffer data volume information of the LCG;
   or
manner 3: receiving a configuration from the base station, and sequentially including the report content information in manner 1 or manner 2 until all the report content information is included in the BSR or the capacity provided in the uplink grant is used up.

For example, in a case that there are two LCGs, that is, LCG 1 and LCG 2, if a priority of LCG 1 is higher than that of LCG 2, the UE can perform reporting according to the foregoing manner 1, and in this case, the priority/order of the report content information included in the BSR is: buffer data volume information of LCG 1, buffer delay information of LCG 1, buffer data volume information of LCG 2, and delay information of LCG 2. If the capacity provided in the uplink grant is used up after the buffer data volume information of LCG 2 is included, the report content information in BSR reporting by the UE only includes: buffer data volume information of LCG 1, delay information of LCG 1, and buffer data volume information of LCG 2.

Optionally, in this embodiment of this application, the foregoing step 301 may be specifically implemented by the following step 301c.

Step 301c: The UE fills the buffer data volume and/or the delay information of the at least one LCG into the second long truncated BSR according to a descending priority order of the at least one LCG.

A filling priority of buffer data volume information of any LCG in the at least one LCG is higher or lower than that of delay information of the any LCG.

Optionally, in this embodiment of this application, the UE may gradually include the delay information into the BSR based on a priority of each of the at least one LCG, and then may include the buffer data volume information into the BSR based on the priority of each of the at least one LCG in descending order, until the capacity provided in the uplink grant can carry the second long truncated BSR or the capacity provided in the uplink grant is used up.

For example, in a case that there are two LCGs, that is, LCG 1 and LCG 2, if a priority of LCG 1 is higher than that of LCG 2, the priority/order of the report content information included in the BSR is: delay information of LCG 1, delay information of LCG 2, buffer information of LCG 1, and buffer information of LCG 2. If the capacity provided in the uplink grant is used up after the delay information of LCG 1 and the delay information of LCG 2 are included in the BSR, the BSR only includes the delay information of LCG 1 and the delay information of LCG 2.

The format determining method provided in this embodiment of this application may be performed by a format determining apparatus. A format determining apparatus provided in an embodiment of this application is described by assuming that the format determining method in this embodiment of this application is performed by the format determining apparatus.

FIG. 4 is a schematic diagram of a possible structure of a format determining apparatus according to an embodiment of this application. As shown in FIG. 4, the format determining apparatus 40 may include a determining module 41.

The determining module 41 is configured to determine to select a target buffer status report BSR format from a first BSR format and a second BSR format based on first information, where the target BSR format is used for BSR reporting; the target BSR format includes the first BSR format and the second BSR format; a BSR in the first BSR format includes first buffer data volume information; and a BSR in the second BSR format may include delay information and/or second buffer data volume information about a time for reporting uplink data of UE, where quantization accuracy of the second buffer data volume information is higher than quantization accuracy of the first buffer data volume information.

This embodiment of this application provides a format determining apparatus. A plurality of BSR formats exist. In a case that the BSR in the first BSR format including only the first buffer data volume information and the BSR in the second BSR format including the delay information and/or the second buffer data volume information about a time for reporting uplink data of the UE exist, the UE can make a selection between the first BSR format and the second BSR format based on the first information. Therefore, the UE can select a BSR corresponding to an appropriate BSR format based on a requirement.

In a possible implementation, the first information includes at least one of the following: first indication information received from a network-side device, first configuration information received from the network-side device, and report content information that the UE needs to report, where the first indication information indicates that the UE is to use the target BSR format.

In a possible implementation, the first BSR format includes at least one of the following: a first long BSR format, a first short BSR format, a first long truncated BSR format, and a first short truncated BSR format; or the second BSR format includes at least one of the following: a second long BSR format, a second short BSR format, a second long truncated BSR format, and a second short truncated BSR format.

In a possible implementation, the first information includes the first configuration information; and the determining module 41 is specifically configured to determine the target BSR format from the first BSR format and the second BSR format based on a first preset condition and the first configuration information.

In a possible implementation, the first preset condition includes at least one of the following: in a case that the first configuration information configures the UE to report delay information of at least one logical channel group LCG, the UE determines that the target BSR format is the second BSR format; in a case that the first configuration information configures the UE to report the delay information of the at least one logical channel group LCG and that the UE determines that the delay information of the at least one LCG needs to be reported, the UE determines that the target BSR format is the second BSR format; in a case that the first configuration information configures the UE to report buffer data volume information of the at least one LCG based on a first table, the UE determines that the target BSR format is the second BSR format; and in a case that the first configuration information configures the UE to report the buffer data volume information of the at least one LCG based on the first table and that the UE determines that the buffer data volume information of the at least one LCG needs to be reported based on the first table, the UE determines that the target BSR format is the second BSR format, where the first table includes the second buffer data volume information, the second buffer data volume information includes a correspondence between a sequence number of a second buffer data volume and a second buffer data volume range, and the second buffer data volume is a buffer data volume corresponding to the second buffer data volume information.

In a possible implementation, the first preset condition includes at least one of the following: in a case that the first configuration information configures the UE to report delay information of at least one LCG and that a data volume of to-be-transmitted data of the at least one LCG is less than or equal to a preset threshold, the UE determines that the target BSR format is the first BSR format; and in a case that the first configuration information configures the UE to report the delay information of the at least one LCG and that the data volume of the to-be-transmitted data of the at least one LCG is greater than the preset threshold, the UE determines that the target BSR format is the second BSR format.

In a possible implementation, the report content information that the UE needs to report includes delay information and/or buffer data volume information.

In a possible implementation, the first information includes the report content information that the UE needs to report; and the determining module 41 is specifically configured to: in a case that the report content information meets a second preset condition, determine that the target BSR format is a first target BSR format; or in a case that the report content information meets a third preset condition, determine that the target BSR format is a second target BSR format, where the second preset condition includes: the UE triggers filling of the to-be-reported content information into a BSR, the to-be-reported content information only includes to-be-transmitted data information of one LCG, and the one LCG includes delay information or a buffer data volume quantized by using a first table; the first target BSR format includes any one of the following: the second long BSR format, the second short BSR format, the second long truncated BSR format, or the second short truncated BSR format; the third preset condition includes: the UE triggers filling of the to-be-reported content information into a BSR, the to-be-reported content information only includes the to-be-transmitted data information of the one LCG, and the UE determines that the delay information does not need to be reported and that the buffer data volume does not need to be quantized by using the first table; the second target BSR format includes either of the following: the first short BSR format or the first short truncated BSR format; and the first table includes the second buffer data volume information, the second buffer data volume information includes a correspondence between a sequence number of a second buffer data volume and a second buffer data volume range, and the second buffer data volume is a buffer data volume corresponding to the second buffer data volume information.

In a possible implementation, the target BSR format includes the second long truncated BSR format, and the format determining apparatus 40 further includes a filling module, where the filling module is configured to fill, based on priority information of at least one LCG and second information, report content information included in a second long truncated BSR, and send the second long truncated BSR to the network-side device, where the second information includes at least one of the following: an amount of data allowed to be transmitted on an uplink channel, and to-be-transmitted buffer data volume information and/or delay information of the at least one LCG, and the second long truncated BSR is a BSR corresponding to the second long truncated BSR format.

In a possible implementation, the filling module is specifically configured to fill the buffer data volume information of the at least one LCG into the second long truncated BSR according to a principle that a priority of the buffer data volume information of the at least one LCG is higher than a priority of the delay information of the at least one LCG and a descending priority order of the at least one LCG; and then fill the delay information of the at least one LCG into the second long truncated BSR.

In a possible implementation, the filling module is specifically configured to fill the delay information of the at least one LCG into the second long truncated BSR according to a principle that a priority of the buffer data volume information of the at least one LCG is lower than a priority of the delay information of the at least one LCG and a descending priority order of the at least one LCG; and then fill the buffer data volume information of the at least one LCG into the second long truncated BSR.

In a possible implementation, the filling module is specifically configured to fill the buffer data volume information and/or the delay information of the at least one LCG into the second long truncated BSR according to a descending priority order of the at least one LCG, where a filling priority of buffer data volume information of any LCG in the at least one LCG is higher or lower than that of delay information of the any LCG.

The format determining apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The format determining apparatus provided in this embodiment of this application can implement each process implemented in the foregoing embodiment of the format determining method, with the same technical effect achieved. To avoid repetition, details are not described herein again.

Optionally, as shown in FIG. 5, an embodiment of this application further provides a communication device 600, including a processor 601 and a memory 602. The memory 602 stores a program or instructions capable of running on the processor 601. For example, when the communication device 600 is a terminal, and the program or instructions are executed by the processor 601, the steps of the foregoing embodiment of the format determining method are implemented, with the same technical effect achieved. When the communication device 600 is a network-side device, and the program or instructions are executed by the processor 601, the steps of the foregoing embodiment of the format determining method are implemented, with the same technical effect achieved. To avoid repetition, details are not described herein again.

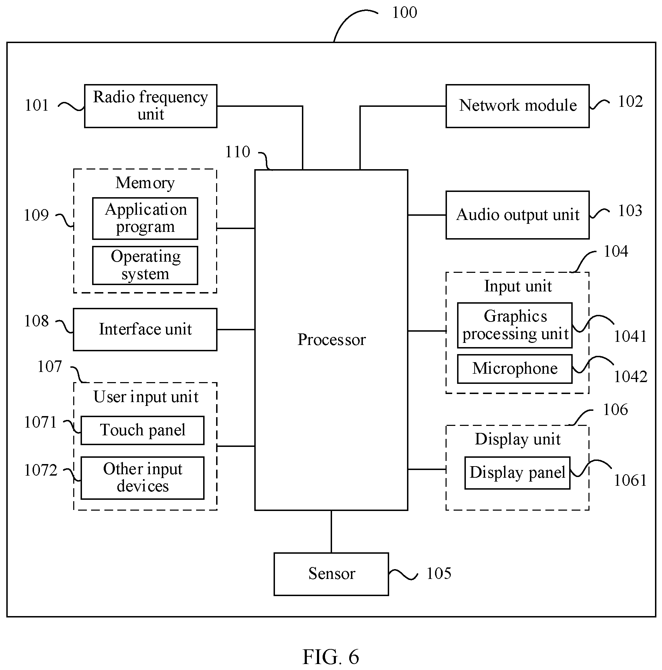

An embodiment of this application further provides UE, including a processor and a communication interface. The processor is configured for the UE to select a target buffer status report BSR format based on first information, where the target BSR format is used for BSR reporting; the target BSR format includes a first BSR format and a second BSR format; a BSR in the first BSR format includes first buffer data volume information; and a BSR in the second BSR format includes delay information and/or second buffer data volume information about a time for reporting uplink data of the UE, where quantization accuracy of the second buffer data volume information is higher than quantization accuracy of the first buffer data volume information. The UE embodiment corresponds to the foregoing UE-side method embodiment, and each implementation process and implementation of the foregoing method embodiment can be applied to the UE embodiment, with the same technical effect achieved. Specifically, FIG. 6 is a schematic diagram of a hardware structure of UE for implementing an embodiment of this application.

The UE 100 includes but is not limited to at least some components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the terminal 100 may further include a power supply (for example, a battery) supplying power to all components. Optionally, the power supply may be logically connected to the processor 110 through a power management system. In this way, functions such as charge management, discharge management, and power consumption management are implemented by using the power management system. The terminal structure shown in FIG. 6 does not constitute a limitation on the terminal. The terminal may include more or fewer components than those shown in the figure, or some components are combined, or component arrangements are different. Details are not described herein again.

It should be understood that, in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 101 may transmit the downlink data to the processor 110 for processing. In addition, the radio frequency unit 101 may send uplink data to the network-side device. Usually, the radio frequency unit 101 includes but is not limited to an antenna, an amplifier, a transceiver, a coupler, a low noise amplifier, a duplexer, and the like.

The memory 109 may be configured to store software programs or instructions and various data. The memory 109 may primarily include a first storage area for storing programs or instructions and a second storage area for storing data. The first storage area may store an operating system, an application program or instructions required by at least one function (such as an audio play function and an image play function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 109 in this embodiment of this application includes but is not limited to these and any other suitable types of memories.

The processor 110 may include one or more processing units. Optionally, the processor 110 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 110.

The processor 110 is configured to determine to select a target buffer status report BSR format from a first BSR format and a second BSR format based on first information, where the target BSR format is used for BSR reporting; the target BSR format includes the first BSR format and the second BSR format; a BSR in the first BSR format includes first buffer data volume information; and a BSR in the second BSR format may include delay information and/or second buffer data volume information about a time for reporting uplink data of the UE, where quantization accuracy of the second buffer data volume information is higher than quantization accuracy of the first buffer data volume information.

This embodiment of this application provides UE. A plurality of BSR formats exist. In a case that the BSR in the first BSR format including only the first buffer data volume information and the BSR in the second BSR format including the delay information and/or the second buffer data volume information about a time for reporting uplink data of the UE exist, the UE can make a selection between the first BSR format and the second BSR format based on the first information. Therefore, the UE can select a BSR corresponding to an appropriate BSR format based on a requirement.

Optionally, the first information includes the first configuration information; and the processor 110 is specifically configured to determine the target BSR format from the first BSR format and the second BSR format based on a first preset condition and the first configuration information.

Optionally, the first information includes the report content information that the UE needs to report; and the processor 110 is specifically configured to: in a case that the report content information meets a second preset condition, determine that the target BSR format is a first target BSR format; or in a case that the report content information meets a third preset condition, determine that the target BSR format is a second target BSR format, where the second preset condition includes: the UE triggers filling of the to-be-reported content information into a BSR, the to-be-reported content information only includes to-be-transmitted data information of one LCG, and the one LCG includes delay information or a buffer data volume quantized by using a first table; the first target BSR format includes any one of the following: the second long BSR format, the second short BSR format, the second long truncated BSR format, or the second short truncated BSR format; the third preset condition includes: the UE triggers filling of the to-be-reported content information into a BSR, the to-be-reported content information only includes the to-be-transmitted data information of the one LCG, and the UE determines that the delay information does not need to be reported and that the buffer data volume does not need to be quantized by using the first table; the second target BSR format includes either of the following: the first short BSR format or the first short truncated BSR format; and the first table includes the second buffer data volume information, the second buffer data volume information includes a correspondence between a sequence number of a second buffer data volume and a second buffer data volume range, and the second buffer data volume is a buffer data volume corresponding to the second buffer data volume information.

Optionally, the target BSR format includes the second long truncated BSR format, and the processor 110 is configured to fill, based on priority information of at least one LCG and second information, report content information included in a second long truncated BSR, and send the second long truncated BSR to the network-side device, where the second information includes at least one of the following: an amount of data allowed to be transmitted on an uplink channel, and to-be-transmitted buffer data volume information and/or delay information of the at least one LCG, and the second long truncated BSR is a BSR corresponding to the second long truncated BSR format.

Optionally, the processor 110 is specifically configured to fill the buffer data volume information of the at least one LCG into the second long truncated BSR according to a principle that a priority of the buffer data volume information of the at least one LCG is higher than a priority of the delay information of the at least one LCG and a descending priority order of the at least one LCG; and then fill the delay information of the at least one LCG into the second long truncated BSR.

Optionally, the processor 110 is specifically configured to fill the delay information of the at least one LCG into the second long truncated BSR according to a principle that a priority of the buffer data volume information of the at least one LCG is lower than a priority of the delay information of the at least one LCG and a descending priority order of the at least one LCG; and then fill the buffer data volume information of the at least one LCG into the second long truncated BSR.

Optionally, the processor 110 is specifically configured to fill the buffer data volume information and/or the delay information of the at least one LCG into the second long truncated BSR according to a descending priority order of the at least one LCG, where a filling priority of buffer data volume information of any LCG in the at least one LCG is higher or lower than that of delay information of the any LCG.

An embodiment of this application further provides a readable storage medium. The readable storage medium stores a program or instructions. When the program or instructions are executed by a processor, each process of the foregoing embodiment of the format determining method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the format determining method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the format determining method, with the same technical effect achieved. To avoid repetition, details are not described herein again.

An embodiment of this application further provides a format determining system, including UE and a network-side device. The UE may be configured to perform the steps of the foregoing format determining method. The network-side device may be configured to perform the steps of the foregoing format determining method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A format determining method, wherein the method comprises:
determining, by a user equipment UE, a target buffer status report BSR format from a first BSR format and a second BSR format based on first information, wherein
the target BSR format is used for BSR reporting;
a BSR in the first BSR format comprises first buffer data volume information; and
a BSR in the second BSR format comprises delay information and/or second buffer data volume information about a time for reporting uplink data of the UE, wherein
quantization accuracy of the second buffer data volume information is higher than quantization accuracy of the first buffer data volume information.

2. The method according to claim 1, wherein the first information comprises at least one of the following:
first indication information received from a network-side device,
first configuration information received from the network-side device, and
report content information that the UE needs to report, wherein
the first indication information instructs the UE to use the target BSR format.

3. The method according to claim 2, wherein
the first BSR format comprises at least one of the following: a first long BSR format, a first short BSR format, a first long truncated BSR format, and a first short truncated BSR format; or
the second BSR format comprises at least one of the following: a second long BSR format, a second short BSR format, a second long truncated BSR format, and a second short truncated BSR format.

4. The method according to claim 2, wherein the first information comprises the first configuration information; and
the determining, by the UE, a target BSR format from a first BSR format and a second BSR format based on first information comprises:
determining, by the UE, the target BSR format from the first BSR format and the second BSR format based on a first preset condition and the first configuration information.

5. The method according to claim 4, wherein the first preset condition comprises at least one of the following:
in a case that the first configuration information configures the UE to report delay information of at least one logical channel group LCG, the UE determines that the target BSR format is the second BSR format;
in a case that the first configuration information configures the UE to report the delay information of the at least one logical channel group LCG and that the UE determines that the delay information of the at least one LCG needs to be reported, the UE determines that the target BSR format is the second BSR format;
in a case that the first configuration information configures the UE to report buffer data volume information of the at least one LCG based on a first table, the UE determines that the target BSR format is the second BSR format; and
in a case that the first configuration information configures the UE to report the buffer data volume information of the at least one LCG based on the first table and that the UE determines that the buffer data volume information of the at least one LCG needs to be reported based on the first table, the UE determines that the target BSR format is the second BSR format, wherein
the first table comprises the second buffer data volume information, the second buffer data volume information comprises a correspondence between a sequence number of a second buffer data volume and a second buffer data volume range, and the second buffer data volume is a buffer data volume corresponding to the second buffer data volume information.

6. The method according to claim 4, wherein the first preset condition comprises at least one of the following:
in a case that the first configuration information configures the UE to report delay information of at least one LCG and that a data volume of to-be-transmitted data of the at least one LCG is less than or equal to a preset threshold, the UE determines that the target BSR format is the first BSR format; and
in a case that the first configuration information configures the UE to report the delay information of the at least one LCG and that the data volume of the to-be-transmitted data of the at least one LCG is greater than the preset threshold, the UE determines that the target BSR format is the second BSR format.

7. The method according to claim 2, wherein the report content information that the UE needs to report comprises delay information and/or buffer data volume information.

8. The method according to claim 3, wherein the first information comprises the report content information that the UE needs to report; and
the determining, by UE, a target BSR format from a first BSR format and a second BSR format based on first information comprises:
in a case that the report content information meets a second preset condition, determining, by the UE, that the target BSR format is a first target BSR format; or
in a case that the report content information meets a third preset condition, determining, by the UE, that the target BSR format is a second target BSR format, wherein
the second preset condition comprises: the UE triggers filling of the to-be-reported content information into a BSR, the to-be-reported content information only comprises to-be-transmitted data information of one LCG, and the one LCG comprises delay information or a buffer data volume quantized by using a first table;
the first target BSR format comprises any one of the following: the second long BSR format, the second short BSR format, the second long truncated BSR format, or the second short truncated BSR format;
the third preset condition comprises: the UE triggers filling of the to-be-reported content information into a BSR, the to-be-reported content information only comprises the to-be-transmitted data information of the one LCG, and the UE determines that the delay information does not need to be reported and that the buffer data volume does not need to be quantized by using the first table;
the second target BSR format comprises either of the following: the first short BSR format or the first short truncated BSR format; and
the first table comprises the second buffer data volume information, the second buffer data volume information comprises a correspondence between a sequence number of a second buffer data volume and a second buffer data volume range, and the second buffer data volume is a buffer data volume corresponding to the second buffer data volume information.

9. The method according to claim 3, wherein the target BSR format comprises the second long truncated BSR format, and the method further comprises:
filling, by the UE based on priority information of at least one LCG and second information, report content information comprised in a second long truncated BSR, and sending the second long truncated BSR to the network-side device, wherein
the second information comprises at least one of the following: an amount of data allowed to be transmitted on an uplink channel, and to-be-transmitted buffer data volume information and/or delay information of the at least one LCG, and the second long truncated BSR is a BSR corresponding to the second long truncated BSR format.

10. The method according to claim 9, wherein
the filling, by the UE based on priority information of at least one LCG and second information, report content information comprised in a second long truncated BSR comprises:
filling, by the UE, the buffer data volume information of the at least one LCG into the second long truncated BSR according to a principle that a priority of the buffer data volume information of the at least one LCG is higher than a priority of the delay information of the at least one LCG and a descending priority order of the at least one LCG; and then filling the delay information of the at least one LCG into the second long truncated BSR.

11. The method according to claim 9, wherein
the filling, by the UE based on priority information of at least one LCG and second information, report content information comprised in a second long truncated BSR comprises:
filling, by the UE, the delay information of the at least one LCG into the second long truncated BSR according to a principle that a priority of the buffer data volume information of the at least one LCG is lower than a priority of the delay information of the at least one LCG and a descending priority order of the at least one LCG; and then filling the buffer data volume information of the at least one LCG into the second long truncated BSR.

12. The method according to claim 9, wherein
the filling, by the UE based on priority information of at least one LCG and second information, report content information comprised in a second long truncated BSR comprises:
filling, by the UE, the buffer data volume information and/or the delay information of the at least one LCG into the second long truncated BSR according to a descending priority order of the at least one LCG, wherein
a filling priority of buffer data volume information of any LCG in the at least one LCG is higher or lower than that of delay information of the any LCG.

13. A format determining apparatus, wherein the apparatus comprises a determining module, wherein
the determining module is configured to determine to select a target buffer status report BSR format from a first BSR format and a second BSR format based on first information, wherein
the target BSR format is used for BSR reporting;
a BSR in the first BSR format comprises first buffer data volume information; and
a BSR in the second BSR format comprises delay information and/or second buffer data volume information about a time for reporting uplink data of user equipment UE, wherein
quantization accuracy of the second buffer data volume information is higher than quantization accuracy of the first buffer data volume information.

14. The apparatus according to claim 13, wherein the first information comprises at least one of the following:
first indication information received from a network-side device,
first configuration information received from the network-side device, and
report content information that the UE needs to report, wherein
the first indication information instructs the UE to use the target BSR format.

15. The apparatus according to claim 14, wherein
the first BSR format comprises at least one of the following: a first long BSR format, a first short BSR format, a first long truncated BSR format, and a first short truncated BSR format; or
the second BSR format comprises at least one of the following: a second long BSR format, a second short BSR format, a second long truncated BSR format, and a second short truncated BSR format.

16. The apparatus according to claim 14, wherein the first information comprises the first configuration information; and
the determining module is specifically configured to determine the target BSR format from the first BSR format and the second BSR format based on a first preset condition and the first configuration information.

17. The apparatus according to claim 16, wherein the first preset condition comprises at least one of the following:
in a case that the first configuration information configures the UE to report delay information of at least one logical channel group LCG, the UE determines that the target BSR format is the second BSR format;
in a case that the first configuration information configures the UE to report the delay information of the at least one logical channel group LCG and that the UE determines that the delay information of the at least one LCG needs to be reported, the UE determines that the target BSR format is the second BSR format;
in a case that the first configuration information configures the UE to report buffer data volume information of the at least one LCG based on a first table, the UE determines that the target BSR format is the second BSR format; and
in a case that the first configuration information configures the UE to report the buffer data volume information of the at least one LCG based on the first table and that the UE determines that the buffer data volume information of the at least one LCG needs to be reported based on the first table, the UE determines that the target BSR format is the second BSR format, wherein
the first table comprises the second buffer data volume information, the second buffer data volume information comprises a correspondence between a sequence number of a second buffer data volume and a second buffer data volume range, and the second buffer data volume is a buffer data volume corresponding to the second buffer data volume information.

18. The apparatus according to claim 12, wherein the first preset condition comprises at least one of the following:
in a case that the first configuration information configures the UE to report delay information of at least one LCG and that a data volume of to-be-transmitted data of the at least one LCG is less than or equal to a preset threshold, the UE determines that the target BSR format is the first BSR format; and
in a case that the first configuration information configures the UE to report the delay information of the at least one LCG and that the data volume of the to-be-transmitted data of the at least one LCG is greater than the preset threshold, the UE determines that the target BSR format is the second BSR format.

19. The apparatus according to claim 14, wherein the report content information that the UE needs to report comprises delay information and/or buffer data volume information.

20. The apparatus according to claim 15, wherein the first information comprises the report content information that the UE needs to report; and
the determining module is specifically configured to: in a case that the report content information meets a second preset condition, determine that the target BSR format is a first target BSR format; or in a case that the report content information meets a third preset condition, determine that the target BSR format is a second target BSR format, wherein
the second preset condition comprises: the UE triggers filling of the to-be-reported content information into a BSR, the to-be-reported content information only comprises to-be-transmitted data information of one LCG, and the one LCG comprises delay information or a buffer data volume quantized by using a first table;
the first target BSR format comprises any one of the following: the second long BSR format, the second short BSR format, the second long truncated BSR format, or the second short truncated BSR format;
the third preset condition comprises: the UE triggers filling of the to-be-reported content information into a BSR, the to-be-reported content information only comprises the to-be-transmitted data information of the one LCG, and the UE determines that the delay information does not need to be reported and that the buffer data volume does not need to be quantized by using the first table;
the second target BSR format comprises either of the following: the first short BSR format or the first short truncated BSR format; and
the first table comprises the second buffer data volume information, the second buffer data volume information comprises a correspondence between a sequence number of a second buffer data volume and a second buffer data volume range, and the second buffer data volume is a buffer data volume corresponding to the second buffer data volume information.

21. The apparatus according to claim 15, wherein the target BSR format comprises the second long truncated BSR format, and the apparatus further comprises a filling module, wherein
the filling module is configured to fill, based on priority information of at least one LCG and second information, report content information comprised in a second long truncated BSR, and send the second long truncated BSR to the network-side device, wherein
the second information comprises at least one of the following: an amount of data allowed to be transmitted on an uplink channel, and to-be-transmitted buffer data volume information and/or delay information of the at least one LCG, and the second long truncated BSR is a BSR corresponding to the second long truncated BSR format.

22. The apparatus according to claim 21, wherein
the filling module is specifically configured to fill the buffer data volume information of the at least one LCG into the second long truncated BSR according to a principle that a priority of the buffer data volume information of the at least one LCG is higher than a priority of the delay information of the at least one LCG and a descending priority order of the at least one LCG; and then fill the delay information of the at least one LCG into the second long truncated BSR.

23. The apparatus according to claim 21, wherein
the filling module is specifically configured to fill the delay information of the at least one LCG into the second long truncated BSR according to a principle that a priority of the buffer data volume information of the at least one LCG is lower than a priority of the delay information of the at least one LCG and a descending priority order of the at least one LCG; and then fill the buffer data volume information of the at least one LCG into the second long truncated BSR.

24. The apparatus according to claim 21, wherein
the filling module is specifically configured to fill the buffer data volume information and/or the delay information of the at least one LCG into the second long truncated BSR according to a descending priority order of the at least one LCG, wherein
a filling priority of buffer data volume information of any LCG in the at least one LCG is higher or lower than that of delay information of the any LCG.

25. A user equipment UE, comprising a processor and a memory, wherein the memory stores a program or instructions capable of running on the processor, and when the program or instructions are executed by the processor, the steps of the format determining method according to any one of claims 1 to 12 are implemented.

26. A readable storage medium, wherein the readable storage medium stores a program or instructions, and when the program or instructions are executed by a processor, the format determining method according to any one of claims 1 to 12 is implemented.
